# EUROPÄISCHE PATENTSCHRIFT

(11) **EP 1 104 636 B1**
(45) Veröffentlichungstag und Bekanntmachung des Hinweises auf die Patenterteilung: **01.03.2006**
(21) Anmeldenummer: 99952315.2
(22) Anmeldetag: 06.08.1999
(51) Int. Cl.: H04Q 3/00

(54) **VERFAHREN UND EINRICHTUNG ZUR ÜBERPRÜFUNG DER FUNKTIONSFÄHIGKEIT EINER VERMITTLUNGSSTELLE**
METHOD AND DEVICE FOR TESTING THE FUNCTIONALITY OF A SWITCHING CENTER
PROCEDE ET DISPOSITIF POUR EXAMINER LE FONCTIONNEMENT D'UN CENTRE DE COMMUTATION

(30) Priorität: 12.08.1998 DE 19836560
(43) Veröffentlichungstag der Anmeldung: 06.06.2001
(73) Patentinhaber: SIEMENS AKTIENGESELLSCHAFT, 80333 München (DE)
(72) Erfinder: VAN DER GOUWE, Pieter, D-82256 Fürstenfeldbruck (DE)
(86) Internationale Anmeldenummer: PCT/DE1999/002458
(87) Internationale Veröffentlichungsnummer: WO 2000/010313

(56) Entgegenhaltungen:
- EP-A- 0 435 448
- EP-A- 0 840 530
- WO-A-97/11563

## Beschreibung

Die Erfindung betrifft ein Verfahren zur Überprüfung der Funktionsfähigkeit einer zu prüfenden Vermittlungsstelle, welche in einem Telekommunikationsnetz zur Herstellung von Teilnehmerverbindungen einsetzbar ist und welche zumindest zwei Vermittlungsanschlüsse, an welche Vermittlungsstellen anschließbar sind und in welchen jeweils eine Zwischenschnittstelle für den Austausch von Nutzinformation der Teilnehmerverbindungen mit einer jeweils angeschlossenen Vermittlungsstelle vorgesehen ist, und zumindest eine Signalisierungsschnittstelle, über welche der Austausch von Signalisierungsnachrichten zur Steuerung der Teilnehmerverbindungen und zur Verwaltung der Zwischenschnittstellen erfolgt, aufweist, wobei jede Signalisierungsnachricht Angaben betreffend ihre Ursprungs- und Zielvermittlungsstelle aufweist.

Weiters betrifft die Erfindung eine Einrichtung zur Überprüfung der Funktionsfähigkeit einer zu prüfenden Vermittlungsstelle zur Herstellung von Teilnehmerverbindungen in einem Telekommunikationsnetz.

Gleichermaßen betrifft die Erfindung eine Vermittlungsstelle, welche in einem Telekommunikationsnetz zur Herstellung von Teilnehmerverbindungen einsetzbar ist und welche zumindest zwei Vermittlungsanschlüsse, an welche Vermittlungsstellen anschließbar sind und in welchen jeweils eine Zwischenschnittstelle für den Austausch von Nutzinformation der Teilnehmerverbindungen mit einer jeweils angeschlossenen Vermittlungsstelle vorgesehen ist, und zumindest eine Signalisierungsschnittstelle, über welche der Austausch von Signalisierungsnachrichten zur Steuerung der Teilnehmerverbindungen und zur Verwaltung der Zwischenschnittstellen erfolgt, aufweist, wobei jede Signalisierungsnachricht Angaben betreffend ihre Ursprungs- und Zielvermittlungsstelle aufweist.

Telekommunikationsnetze, insbesondere Telefonnetze, weisen untereinander vernetzte Vermittlungsstellen auf, welche dem Aufbau und Erhalt von Gesprächsverbindungen zwischen den Teilnehmern eines Netzes dienen. Die Vermittlungsstellen moderner Telekommunikationsnetze sind automatisierte Einrichtungen, die mehrere Komponenten, z.B. ein oder mehrere Koppelnetze, eine Zentralsteuerung, Anschaltegruppen usf., umfassen. Untereinander kommunizieren Vermittlungsstellen mittels spezifischer Zwischenamtssignale zur Steuerung und Überwachung der Vermittlungsvorgänge sowie der ausgeführten Dienste und zur Verwaltung der Verbindungen und Verbindungsleitungen. Diese Signale werden vielfach in Form von Signalisierungsnachrichten ausgetauscht, die über eigene, von den Nutzkanälen unterschiedene Kanäle zwischen den Vermittlungsstellen ausgetauscht werden und deren Form von dem jeweils verwendeten Protokoll abhängt. Ein Beispiel eines solchen Zwischenamtsprotokolles ist das sogenannte Signalisierungssystem Nr. 7 oder kurz CCS7 ('Common Channel Signaling system no. 7') nach den Standards Q.700 bis Q.716 der Internationalen Telekommunikationsunion (ITU). Im CCS7 ist der Austausch der Signalisierungsnachrichten einem eigenen Zentralkanalnetz zugeordnet.

Aufgrund der hohen Anforderungen an eine Vermittlungsstelle während des Betriebes muß vor der Inbetriebnahme eine Überprüfung der Vermittlungsfunktionen stattfinden, zweckmäßigerweise noch vor Einbinden der Vermittlungsstelleneinrichtung in das Netz, um ein Risiko einer ernsthafte Beeinträchtigung des Netzbetriebs von vornherein zu vermeiden, oder sogar vor ihrer Auslieferung. Das realitätsnahe Testen einer Vermittlungsstelle erfordert die Einbettung der zu prüfenden Vermittlungsstelle in eine Netzumgebung, die ausreichend groß ist, um den Testanforderungen genüge zu tun. Da die Einbettung der Vermittlungsstelle in ein reales Netz während der Überprüfung nicht möglich ist, muß das Netz - genauer gesagt die mit der Vermittlungsstelle verbundenen Partner-Vermittlungsstellen - durch Testgeräte nachgebildet werden. Diese Testgeräte dienen der Simulation jeweils einer oder mehrerer Partner-Vermittlungsstellen. Um jedoch ein realistisches Netz, z.B. mit einigen hundert bis tausend Vermittlungsstellen, nachzubilden, wäre somit eine sehr große Anzahl von Testgeräten notwendig, die aus Gründen der damit verbundenen Kosten und Schwierigkeiten der Bedienung nicht zur Verfügung gestellt werden konnten. Deshalb mußte bisher gewöhnlich auf realitätsnahe Tests in großen Netzkonfigurationen verzichtet werden.

Es ist Aufgabe der Erfindung, eine realistische Überprüfung der Funktionsfähigkeit einer Vermittlungsstelle mit einfachen Mitteln und bei leichter Bedienbarkeit zu ermöglichen, wobei im besonderen ein umfangreiches Netz nachgebildet werden kann.

Die Aufgabe wird von einem Verfahren der eingangs genannten Art gelöst, bei welchem erfindungsgemäß von der zu prüfenden Vermittlungsstelle ausgesandte, ursprüngliche Signalisierungsnachrichten, in welchen die zu prüfende Vermittlungsstelle als Ursprungestelle angegeben ist, empfangen werden, die ursprünglichen Signalisierungsnachrichten nach einer ersten vorgegebenen Vorschrift jeweils in Signalisierungsnachrichten, in welchen die zu prüfende Vermittlungsstelle als Zielstelle angegeben ist, konvertiert werden und die so konvertierten Signalisierungsnachrichten an die zu prüfende Vermittlungsstelle gesendet werden.

Durch diese Lösung wird die gestellte Aufgabe auf einfache Weise gelöst, insbesondere ist es nicht erforderlich, eine Anzahl von Testgeräten bereitzustellen und an die zu prüfende Vermittlungsstelle anzuschließen.

In einer bevorzugten Ausführungsform des erfindungsgemäßen Verfahrens werden zum Zwecke der Verringerung der Anzahl der Signalisierungsschnittstellen die konvertierten Signalisierungsnachrichten der zu prüfenden Vermittlungsstelle jeweils über jene Signalisierungsschnittstelle gesendet, über welche die zugehörige ursprüngliche Signalisierungsnachricht empfangen wurde.

Günstigerweise wird in den konvertierten Signalisierungsnachrichten als Ürsprungsstelle jeweils eine Vermittlungsstelle, die der Zielstelle der zugehörigen ursprünglichen Signalisierungsnachricht eindeutig zugeordnet ist, angegeben.

Dabei ist zweckmäßig für einen überschaubaren Testbetrieb, wenn die in den Signalisierungsnachrichten angegebenen Vermittlungsstellen einander paarweise zugeordnet sind und daß in der konvertierten Signalisierungsnachricht als Ursprungsstelle die der Zielstelle der ursprünglichen Signalisierungsnachricht zugeordnete Vermittlungsstelle angegeben wird.

Für eine einfache Realisierung der paarweisen Zuordnung ist es dabei vorteilhaft, wenn die Adressen der einander zugeordneten Vermittlungsstellen durch eine Inversionsoperation auseinander bestimmt werden.

Weiters ist es für eine einfache Realisierung eines Testaufbaus zweckmäßig, wenn jeweils jene Zwischenschnitrstellen, die einander zugeordneten Vermittlungsstellen logisch zugeordnet sind, durchgeschleift werden.

Besonders vorteilhaft erweist sich die Erfindung, wenn die Signalisierungsschnittstelle an ein von den Zwischenschnittstellen unabhängiges Signalisierungsnetz angeschlossen ist, da hierbei die getrennte Behandlung der Schnittstellen ausgenützt werden kann.

Um sowohl assoziierte als auch quasi-assoziierte Signalisierungsvorgänge testen zu können, können in einer weiteren vorteilhaften Ausführungsform zusätzlich Signalisierungsnachrichten, in denen von der zu prüfenden Vermittlungsstelle verschiedene Ursprungs- und Zielstellen angegeben werden, erzeugt und an die zu prüfende Vermittlungsstelle gesendet werden, und von der zu prüfenden Vermittlungsstelle ausgesandte Signalisierungsnachrichten, in denen von der zu prüfenden Vermittlungsstelle verschiedene Ursprungs- und Zielstellen angegeben werden, empfangen und hinsichtlich der Übereinstimmung in Bezug auf früher gesendete Signalisierungsnachrichten überprüft werden.

Weiters wird die oben gestellte Aufgabe ausgehend von einer Einrichtung zur Überprüfung der Funktionsfähigkeit einer zu prüfenden Vermittlungsstelle von einer Einrichtung gelöst mit einer Signalisierungsschnittstelle, an welche die zu prüfende Vermittlungsstelle anschließbar ist und welche für den Austausch von Signalisierungsnachrichten zwischen Vermittlungsstellen zur Steuerung von Teilnehmerverbindungen und zur Verwaltung der die Vermittlungsstellen verbindenden zwischenschnittstellen eingerichtet ist, wobei jede Signalisierungsnachricht Angaben betreffend ihre Ursprungs- und Zielvermittlungsstelle aufweist, mit einer Einrichtung zum Senden und Empfangen von Signalisierungsnachrichten über die Signalisierungsschnittstelle(n) und mit einer Konvertereinrichtung, deren Ausgang der Sende/ Empfangseinrichtung zugeführt ist und der seitens der Sende/ Empfangseinrichtung empfangene Signalisierungsnachrichten zuführbar sind, zur Konversion von ursprünglichen Signalisierungsnachrichten nach einer ersten vorgegebenen Vorschrift in konvertierte Signalisierungsnachrichten, in welchen als Zielstelle jeweils die Ursprungsstelle der ursprünglichen Signalisierungsnachricht angegeben ist.

Diese Einrichtung ermöglicht das Testen von Vormittlungsstellen gemäß der Erfindung einschließlich ihrer weiter oben dargestellten Vorteile.

Eine vorteilhafte Ausführungsform der erfindungsgemäßen Einrichtung, welche zur Konversion von Signalisierungsnachrichten noch das Erzeugung und Empfangen einer Signalisierung ermöglicht, enthält eine Nachrichtenquelle, deren Ausgang der Sende/ Empfangseinrichtung zugeführt ist, zur Erzeugung von Signalisierungsnachrichten, in denen von der zu prüfenden Vermittlungsstelle verschiedene Ursprungs- und Zielstellen angegeben sind, eine Nachrichtensenke zur Entgegennahme von Signalisierungsnachrichten und/oder deren Auswertung hinsichtlich der Übereinstimmung in Bezug auf früher gesendete Signalisierungsnachrichten, und eine Diskriminator-Einrichtung, welcher seitens der Sende/ Empfangseinrichtung empfangene Signalisierungsnachrichten zuführbar sind, zur Zuteilung der Signalisierunersnachrichten zu nachfolgenden, Nachrichten verarbeitenden Einrichtungen wie der Konvertereinrichtung und der Nachrichtensenke nach einer zweiten, zu der ersten unterschiedlichen, vorgegebenen Vorschrift unter Verwendung des Inhalts der betreffenden Signalisierungsnachricht.

Gleichermaßen wird die oben gestellte Aufgabe von einer Vermittlung der eingangs dargestellten Art gelöst, welche eine Ronvertereinrichtung aufweist zur Konversion von ursprünglichen Signalisierungsnachrichten nach einer ersten vorgegebenen Vorschrift in konvertierte Signalisierungsnachrichten, in welchen als Zielstelle jeweils die Ursprungsstelle der ursprünglichen Signalisierungsnachricht angegeben ist, sowie eine Umlenkeinrichtung zum Umlenken von zu sendenden Signalisierungsnachrichten als ursprüngliche Signalisierungsnachrichten von der Signalisierungsschnittstelle zu der Konvertereinrichtung und zum Umlenken von in der Konvertereinrichtung konvertierten Signalisierungsnachrichten als bei der Vermittlungsstelle einlangende Signalisierungsnachrichten zu der Signalisierungsschnittstelle.

Durch diese Lösung wird das Testen der Vermittlung ohne die Verwendung zusätzlicher Geräte gelöst, wobei wiederum die weiter oben genannten Vorteile erzielbar sind.

Eine besonders günstige Ausführungsform der erfindungsgemäßen Vermittlung, welche auch die Simulation der Erzeugung und des Empfangens von Signalisierungen ermöglicht, enthält eine Nachrichtenquelle, deren Ausgang der Umlenkeinrichtung zugeführt ist, zur Erzeugung von Signalisierungsnachrichten, in denen von der zu prüfenden Vermittlungsstelle verschiedene Ursprungs- und Zielstellen angegeben sind, eine Nachrichtensenke zur Entgegennahme von Signalisierungsnachrichten und/oder deren Auswertung hinsichtlich der Übereinstimmung in Bezug auf früher gesendete Signalisierungsnachrichten und eine Diskriminator-Einrichtung, welcher seitens der Umlenkeinrichtung umgelenkte Signalisierungsnachrichten zuführbar sind, zur Zuteilung der Signalisierungsnachrichten zu nachfolgenden, Nachrichten verarbeitenden Einrichtungen wie der Konvertereinrichtung und der Nachrichtensenke nach einer zweiten, zu der ersten unterschiedlichen, vorgegebenen Vorschrift unter Verwendung des Inhalts der betreffenden Signalisierungsnachricht.

Die Erfindung wird im folgenden anhand eines Ausführungsbeispieles, das sich mit der Prüfung einer Telefon-Vermittlungsstelle für ein CCS7-Netz befaßt, näher erläutert. Hierbei werden die beigefügten Zeichnungen herangezogen, welche in schematischen Darstellungen zeigen:
- Fig. 1: eine Anordnung zum Prüfen einer Telefon-Vermittlung;
- Fig. 2: einen Nachrichtenaustausch bei der Herstellung einer Teilnehmerverbindung;
- Fig. 3: die für den Nachrichtenaustausch von Fig. 2 nachgebildete Netzkonfiguration;
- Fig. 4: einen Nachrichtenaustausch zur Initialisierung der nachzubildenden Netzkonfiguration der Fig. 3;
- Fig. 5: den funktionellen Aufbau eines erfindungsgemäßen Nachrichtenkonverters;
- Fig. 6: einen Nachrichtenaustausch, worin die Vermittlung als Signalisierungstransferpunkt fungiert; und
- Fig. 7: die Protokollschichten-Architektur des erfindungsgemäßen Nachrichtenkonverters.

Das Ausführungsbeispiel betrifft die Prüfung einer Telefon-vermittlung, welche für die Zwischenamtssignalisierung nach dem CCS7-System ausgelegt ist. Das CCS7-System zeichnet sich dadurch aus, daß die Signalisierungsinformation der Zwischenamtssignalisierung getrennt von den Nutzkanälen, über die der Austausch von Nutzinformation der Teilnehmerverbindungen erfolgt, die somit im Beispiel Sprachkanäle sind und auf die sich die Signalisierungsinformation bezieht, über spezielle, für viele Nutzkanäle gemeinsam genutzte Signalisierungsschnittstellen übermittelt wird. Die auch als Zentrale Zeichenkanäle bezeichneten Signalisierungsschnittstellen zwischen den Vermittlungsstellen bilden zusammen ein eigenständiges, auf dem Prinzip der Teilstreckenvermittlung beruhendes Signalisierungsnetz, das von dem Nutzkanal-Durchschaltenetzwerk getrennt ist.

Interaktionen zwischen Signalisierungsnetz und Nutzkanalnetz ergeben sich im Zuge des abschnittsweisen Aufbaus einer Nutzverbindung immer nur in jenen Vermittlungsstellen, in denen eine anwendungsorientierte Bearbeitung einschließlich der Erzeugung von Signalisierungsnachrichten durchgeführt wird. Diese Endpunkte - eine die Nachricht erzeugende Ursprungsstelle und eine die Nachricht empfangende Zielstelle - einer Signalisierungsbeziehung werden als Signalisierungsendpunkte bezeichnet (SP, 'Signal Point'). Dazwischenliegende Vermittlungsstellen, die die Signalisierungsnachrichten auf der Signalisierungsstrecke zwischen Ursprungs- und Zielstelle ohne Bearbeitung weiterleiten, heißen Signalisierungstransferpunkte (STP, 'Signal Transfer Point'). In Abhängigkeit von der betreffenden Nachricht kann ein und dieselbe Vermittlungsstelle als Signalisierungsend- oder -transferpunkt fungieren.

Jeder Vermittlungsstelle ist innerhalb des Telekommunikationsnetzes bzw. des Signalisierungsnetzes ein Stellencode (SPC, 'Signaling Point Code') zur eindeutigen Kennzeichnung und Adressierung zugeordnet. In den Signalisierungsnachrichten wird der Stellencode dazu verwendet, die Ursprungsstelle und die Zielstelle der betreffenden Nachricht anzuzeigen. Hierzu weist jede Signalisierungsnachricht ein Adressenfeld mit einem Ursprungscode (OPC, 'Originating Point Code') und einem Zielcode (DPC, 'Destination Point Code') auf, die neben anderen Informationen des Adressenfeldes zur Steuerung des Nachrichtenroutings dienen.

Es sei an dieser Stelle darauf hingewiesen, daß die Erfindung sich nicht allein auf CCS7-Vermittlungen bezieht, sondern auf Vermittlungen von Signalisierungssystemen anwendbar ist, welche eine von Nutzkanälen zumindest logisch getrennte Zwischenamtssignalisierung aufweisen. Für die Erfindung ist es hierbei von untergeordneter Bedeutung, ob die für die Zwischenamtssignalisierung vorgesehenen Signalisierungskanäle von den Nutzkanälen unterschiedlich sind oder sogar ein eigenes Signalisierungsnetz bilden. Voraussetzung der Erfindung ist die zentralisierte Behandlung der Signalisierungsinformation und die Übertragung dieser über Signalisierungsschnittstellen. Hierbei ist es belanglos, ob die Signalisierungsschnittstellen beispielsweise als eigene physikalische Anschlüsse realisiert sind oder etwa als Teil einer Zwischenschnittstelle mit Nutzkanälen, von denen bestimmte Kanäle permanent oder vorübergehend als Signalisierungskanäle genutzt sind.

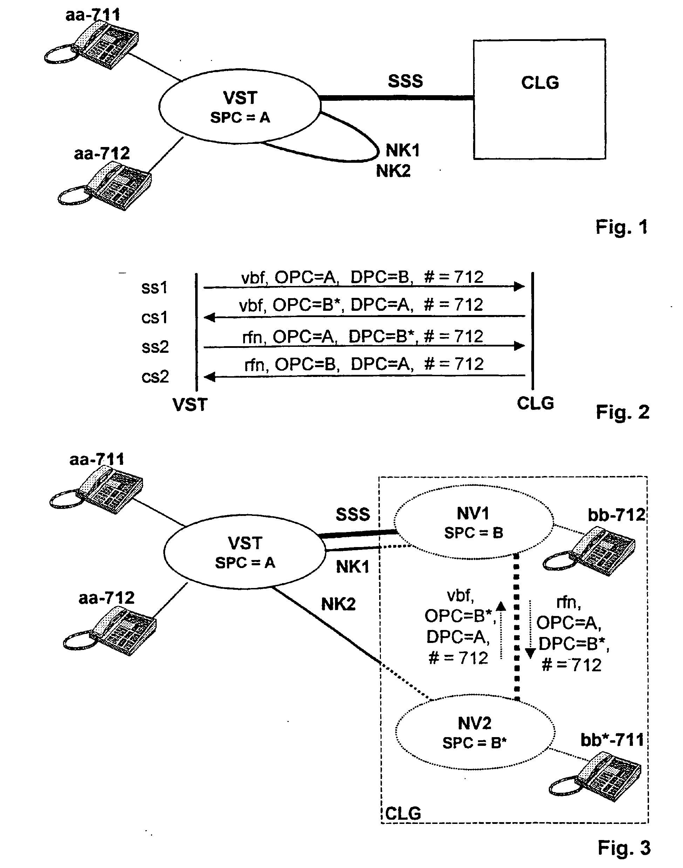

In Fig. 1 ist die zu prüfende Vermittlungsstelle VST gezeigt, welche eine Signalisierungsschnittstelle SSS aufweist, die mit einen Nachrichtenkonverter verbunden ist, welcher im folgenden als Lastkonverter CLG ('Converting Load Generator') bezeichnet wird. Der Vermittlungstelle VST ist ein Stellencode zugeordnet, der hier als A symbolisch wiedergegeben sei.

Der Lastkonverter CLG kann beispielsweise als eigenständige Einrichtung ausgeführt sein, die für die Prüfung der Vermittlungsstelle VST über deren Signalisierungsschnittstelle SSS angeschlossen wird.

Ebenso ist es möglich, den Lastkonverter CLG in der Vermittlungsstelle VST zu realisieren. Im diesem Falle kann der Lastkonverter CLG mittels zusätzlicher Komponenten der Vermittlungsstelle verwirklicht werden und/oder als zusätzliches Programm , das auf der von der Vermittlung VST gebotenen Hardware-Plattform abläuft. Hierbei kann der Lastkonverter CLG auch in der Vermittlungsstelle VST bereits vorhandene Funktionen der Signalisierung verwenden; vorteilhafterweise ergibt sich dann etwa im Falle einer Betriebsverbesserung oder -änderung seitens der Vermittlung, z.B. eine Aufrüstung mit einer neuen Funktionenversion, auch eine entsprechende Verbesserung bzw. Änderung des Verhaltens des Lastkonverters. Der in der Vermittlungsstelle VST realisierte Lastkonverter wird z.B. durch einen Schalter oder einen spezifischen Befehl aktiviert; zugleich wird die Signalisierungsschnittstelle SSS, z.B. über eine Weiche, von dem äußeren Schnittstellen-Anschluß auf den Lastkonverter umgeleitet, sodaß während des Prüfvorgangs die gesamte Zwischenamtssignalisierung der Signalisierungsschnittstelle SSS zum bzw. vom Lastkonverter CLG läuft. Falls der Lastkonverter CLG in Form eines Programmes realisiert ist, kann er z.B. über sogenannte 'Patches', d.s. Verweise und/oder Umleitungsbefehle auf ansonsten ruhenden Code - den Code zur Ausführung der Lastkonverter-Funktionen - im Befehlsspeicher der Lastkonverter-Plattform, aktiviert werden oder mittels Befehlen, die über eine Steuerschnittstelle eingegeben werden, beispielsweise über eine Man-Machine-Schnittstelle oder eine Q3-Schnittstelle eines Telekommunikations-Verwaltungsnetzwerk (TMN).

Während des Prüfvorganges werden die Nutzschnittstellen NK1, NK2, die der Realisierung der Nutzkanäle dienen, durchgeschleift; dies kann in dem hier dargestellten Ausführungsbeispiel z.B. durch an der Vermittlung angebrachte Kabelverbindungen erfolgen. In einer anderen Ausführungsform kann das Durchschleifen der Nutzkanäle, soweit dies möglich ist, auch durch interne Umleitung in der Vermittlung erfolgen, etwa durch den bereits erwähnten Schalter bzw. einen spezifischen Befehl.

Zusätzlich können für die Prüfung ein oder mehrere Endgeräte, z.B. zwei Telefongeräte, an die Vermittlung VST angeschlossen werden. Das Anschließen von Endgeräten ist für die Prüfung beispielsweise einer Durchgangsvermittlung nicht erforderlich. Die angeschlossenen Endstellen erhalten eigene Rufnummern, z.B. aa-711 und aa-712, wobei das Präfix aa die Vorwahl eines der Vermittlung zugeordneten Rufnummernbezirks symbolisiert.

Die Zahl der bei der Prüfung angeschlossenen Endgeräte und der Nutz- bzw. Zwischenschnittstellen ist an sich beliebig. Die Beschränkung auf zwei Endgeräte aa-711,aa-712, zwei Nutzschnittstellen NK1, NK2 und eine Signalisierungsschnittstelle SSS in dem hier dargestellten Ausführungsbeispiel dient lediglich der Einfachheit bei der Darstellung der Erfindung. In anderen Prüfkonfigurationen können weit mehr Endanschlüsse und Zwischenschnittstellen vorgesehen sein; in der Praxis wird eine Vielzahl insbesondere der Zwischenschnittstellen-Schleifen vorliegen, um eine Vielzahl von Nachbarvermittlungsstellen zu simulieren. Dabei ist auch ein Durchschleifen einiger oder aller Endanschlüsse möglich. Es ist ein wesentlicher Vorteil der Erfindung, daß mittels eines einzelnen Lastkonverters eine große Anzahl von Vermittlungsstellen nachgebildet werden kann. Weiters können zu Prüfzwecken auch mehrere Vermittlungsstellen gleichzeitig getestet werden, die untereinander über Zwischenschnittstellen und Signalisierungsschnittstellen verbunden sein können, während die verbleibenden Schnittstellen durch erfindungsgemäße Lastkonverter versorgt werden, die die Einbettung der Vermittlungen in ein größeres Netz simulieren. Der Lastkonverter CLG an sich weist jedoch vorteilhafterweise keine Schnittstellen für Nutzkanäle auf.

Das Grundprinzip des erfindungsgemäßen Lastkonverters CLG beruht auf der Konversion der von der zu prüfenden Vermittlungsstelle VST ausgesendeten Signalisierungsnachrichten. Erfindungsgemäß werden die Signalisierungsnachrichten, in welchen die zu prüfende Vermittlungsstelle VST als Ursprungsstelle angegeben ist, jeweils in Signalisierungsnachrichten, in welchen die zu prüfende Vermittlungsstelle VST als Zielstelle angegeben ist, konvertiert und die so konvertierten Signalisierungsnachrichten an die zu prüfende Vermittlungsstelle VST gesendet.

In Fig. 2 ist ein Beispiel eines Nachrichtenaustausches zwischen der zu prüfenden Vermittlungsstelle VST und dem Lastkonverter CLG der Fig. 1 dargestellt. Dem gezeigten Nachrichtenablauf liegt die beispielhafte Situation zugrunde, daß der Teilnehmer aa-711 eine Telefonverbindung zu einem Teilnehmer bb-712 eines anderen Rufnummernbezirks bb wünscht. Dieser Gesprächswunsch kann vom Testpersonal z.B. durch Wählen der gewünschten Nummer bb-712 am Endgerät aa-711 eingegeben werden. Die Vermittlungsstelle VST sendet somit eine Signalisierungsnachricht ss1 mit einer Verbindungsanforderung vbf für eine Gesprächsverbindung über die Signalisierungsschnittstelle SSS an den Lastkonverter CLG. Die Signalisierungsnachricht enthält als Angaben der Verbindungsanforderung neben dem Stellencode A der Vermittlung VST als Ursprungscode OPC die Rufnummer des gewünschten Teilnehmers 712 und als Zielcode DPC den Stellencode B der den Rufnummernbezirk bb versorgenden Vermittlungsstelle. Der Lastkonverter empfängt die Signalisierungsnachricht ss1 und setzt sie dadurch um, daß der Ursprungscode und der Zielcode gegeneinander ausgetauscht werden und zusätzlich die neue Ursprungsadresse zu dem Stellencode B* invertiert wird. Die Inversion kann beispielsweise durch eine bitweise Inversion (Einerkomplement) des Stellencodes B realisiert werden. Die so gewonnene konvertierte Signalisierungsnachricht cs1 wird über dieselbe Signalisierungsschnittstelle SSS, über die die ursprüngliche Nachricht ss1 übermittelt wurde, an die Vermittlungsstelle VST gesendet.

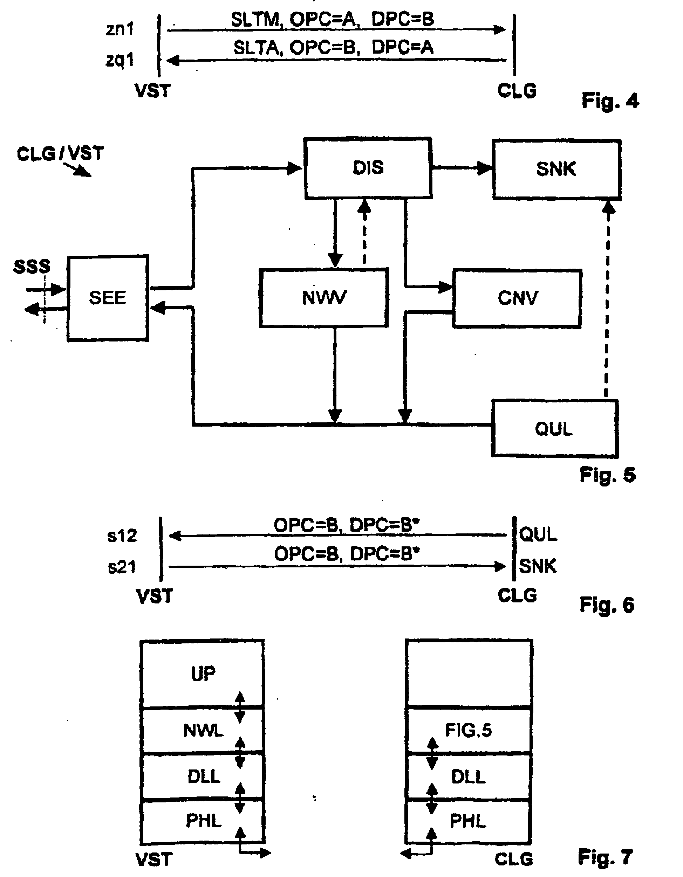

Für die Vermittlungsstelle VST entspricht die konvertierte Nachricht cs1 einer Gesprächsanforderung einer weiteren Vermittlung mit Stellencode B*, deren Teilnehmer 711 den eigenen Teilnehmer aa-712 ruft. Fig. 3 zeigt die Netzkonfiguration, welche durch den Lastkonverter CLG für den Nachrichtenablauf der Fig. 2 nachgebildet wird. Der Lastkonverter simuliert die Funktionen der Vermittlungsstelle NV1 mit Stellencode B und bildet zugleich eine zweite nachgebildete Vermittlungsstelle NV2 mit Stellencode B* nach. Aus der "Sicht" der zu prüfenden Vermittlungsstelle VST erfolgt die Signalisierung mit der ersten simulierten Vermittlungsstelle NV1 direkt (sogenannte assoziierte Signalisierung), während die zweite simulierte Vermittlungsstelle NV2 über die erste simulierte Stelle NV1 als Transferpunkt signalisiert (sogenannte quasi-assoziierte Signalisierung), wie wenn zwischen den beiden simulierten Stellen NV1, NV2 eine Signalisierungsschnittstelle bestünde, über die die Nachrichten von (bzw. zu) der zweiten simulierten Stelle NV2 geleitet werden. Auf diese Weise ermöglicht die Erfindung implizit eine Simulation assoziierter und quasi-assoziierter Signalisierung.

Aufgrund der empfangenen Nachricht cs1 mit einer Verbindungsanforderung führt die Vermittlung die entsprechende Verbindungsherstellung zum Teilnehmer aa-712 aus und sendet schließlich eine Signalisierungsnachricht ss2 mit einer Rufannahme rfn für diesen Teilnehmer mit Zielcode B*, also an die Vermittlungsstelle NV2. Auf die gleiche Weise wie für die erste Signalisierungsnachricht ss1 wird diese Nachricht nun konvertiert; durch die Inversion wird nunmehr in der konvertierten Nachricht cs2 der Stellencode B der ersten simulierten Vermittlungsstelle NV1 zurückgewonnen. Zugleich wird die Verbindungsherstellung zu dem Teilnehmer bb-712 simuliert.

Um die durch die Signalisierungsnachrichten gesteuerten Funktionen hinsichtlich der Nutzkanäle korrekt ablaufen zu lassen, sind zweckmäßigerweise den simulierten Vermittlungsstellen NV1,NV2 Nutzschnittstellen NK1, NK2 zugeordnet und entsprechend durchgeschleift. Diese Maßnahme in Verbindung mit der Nachrichtenkonversion ergibt nun scheinbar - in der "Sicht" der Vermittlungstelle VST - eine Verbindung zwischen den Teilnehmern aa-711 und bb-712 sowie eine zweite zwischen den Teilnehmern bb*-711 und aa-712; tatsächlich liegt eine Verbindung zwischen den Teilnehmer aa-711 und aa-712 über die Nutzkanalschleife NK1, NK2 vor, und diese beiden Teilnehmer können miteinander sprechen. Das Prüfpersonal kann somit auf einfache Weise anhand des hergestellten Gespräches feststellen, ob die Signalisierung korrekt erfolgt ist.

Aufgrund der Erfindung wird für jede Signalisierungsnachricht ss1, ss2, die von der zu prüfenden Vermittlungsstelle VST an eine vom Lastkonverter CLG simulierte Vermittlungsstelle NV1gesendet wird, eine konvertierte Signalisierungsnachricht cs1, cs2 an die Vermittlungsstelle VST zurückgesendet. Durch die nachrichtenweise Spiegelung des Informationsaustausches bei Inversion des Stellencodes gelingt die vollständige Umkehrung des Nachrichtendialoges zwischen Ursprungs- und Zielvermittlung, ohne daß der ursprüngliche Nachrichtendialog durch die konvertierten Nachrichten gestört wird. Selbst das Eintreten von Fehlerereignissen seitens der Teilnehmeranschlüsse, etwa einer Störung des Endgeräts 712, können auf ihre ordnungsgemäße vermittlungsseitige Behandlung überprüft werden.

In diesem Zusammenhang sei darauf hingewiesen, daß für die Erfindung als Inversionsoperation zur Ermittlung des zweiten Stellencodes B* aus dem ersten Stellencode B jede Operation verwendbar ist, deren zweimalige Anwendung das ursprüngliche Resultat liefert. Somit sind neben dem erwähnten Einerkomplement z.B. das Zweierkomplement, die Komplementbildung lediglich bestimmter festgelegter Bits des Codes, die Umkehrung der Bitreihenfolge, die Verwendung einer Tabelle mit paarweisen Zuordnungen usw. möglich.

Erfolgen Signalisierungsnachrichten für andere simulierte Vermittlungsstellen, so simuliert der Lastkonverter durch die Inversion jeweils eine zusätzliche Vermittlungsstellen, insgesamt also doppelt so viele Vermittlungsstellen. Darin liegt der Vorteil, den Stellencode der konvertierten Signalisierungsnachricht aus dem Stellencode der ursprünglichen Signalisierungsnachricht zu ermitteln, da auf diese Weise ein Lastkonverter CLG sehr viele Vermittlungsstellen simulieren kann. Durch die Realisierung einer paarweisen Zuordnung der Stellencodes mittels einer Inversionsoperation können die Nutzschnittstellen durchgeschleift werden, und zwar jeweils jene Nutzschnittstellen, die einander zugeordneten Stellencodes bzw. simulierten Vermittlungsstellen logisch zugeordnet sind.

Es ist aus dem oben Gesagten unmittelbar einleuchtend, daß auch der gegebenenfalls folgende Meldungsverkehr, z.B. beim Verbindungsabbau, durch den erfindungsgemäßen Lastkonverter CLG derart korrekt behandelt wird, daß eine Überprüfung der Vermittlungsfunktionen hierbei möglich ist.

Der Vollständigkeit halber sei angemerkt, daß für die Realisierung des oben dargestellten Ablaufes eine Vorwahlumwandlung eingerichtet werden muß, die die Vorwahlkennungen aa und bb bzw. bb* (die nicht zwingend verschieden sein müssen) ineinander umsetzt. Die Vorwahlumwandlung wird gewöhnlicherweise in der Vermittlungsstelle eingestellt; in besonderen Fällen kann sie auch auf seiten des Lastkonverters eingerichtet sein.

Die bei dem Simulationsvorgang benötigten Informationen betreffend die nachzubildenden Vermittlungsstellen NV1, NV2 bezieht der Lastkonverter CLG aus den Signalisierungsnachrichten der zu prüfenden Vermittlungsstelle VST. Dadurch entfällt eine Programmierung des Lastkonverters CLG, und es ist lediglich die Konfiguration der zu prüfenden Vermittlungsstelle VST für den Betrieb mit dem (simulierten) Prüfnetz sowie das Einrichten der Anschlußverbindungen, d.h. der Zwischenschnittstelle (n) SSS, der durchgeschleiften Nutzschnittstellen sowie gegebenenfalls der Teilnehmeranschlüsse, vorzunehmen. Zusätzliche Informationen, die etwa bei der Erzeugung oder Entgegennahme von Nachrichten durch den Lastkonverter benötigt wird, kann der Lastkonverter CLG z.B. aus den Initialisierungsnachrichten, die gemäß der ITU-Empfehlung Q.707 bei der Aktivierung der Nutzschnittstellen zwischen benachbarten Vermittlungsstellen ausgetauscht werden, gewinnen.

Ein Signalisierungsablauf mit Initialisierungsnachrichten für die Initialisierung des Netzaufbaus nach Fig. 3 ist in Fig. 4 gezeigt. Hierbei sendet die zu prüfende Vermittlung VST eine Zwischenschnittstellen-Initialisierungsnachricht zn1 ('signaling link test message', SLTM) mit dem Stellencode B als Zielcode über die Signalisierungsschnittstelle. Der Lastkonverter CLG empfängt die Nachricht zn1 und ermittelt daraus Konfigurationsinformationen, die für die korrekte Erzeugung und/oder Verarbeitung von Signalisierungsnachrichten in dem simulierten Netz benötigt werden; hierbei entnimmt und speichert der Lastkonverter z.B. aus dem Ursprungscode OPC den Stellencode A der zu prüfenden Vermittlung VST, aus dem Zielcode DPC den Stellencode B, welcher als Stellencode einer zu simulierenden Vermittlungstelle verarbeitet wird, sowie andere Information, z.B. eine Netzwerkkennung ('network indicator'). Weiters quittiert der Lastkonverter CLG die Nachricht mit einer Zwischenschnittstellen-Initialisierungsquittung zq1 ('signaling link test message acknowledgement', SLTA). Zugleich speichert der Lastkonverter CLG die Informationen der Initialisierungsnachrichten für den weiteren Betrieb ab.

Aufgrund des gespeicherten Stellencode B ist der Lastkonverter CLG in der Lage, auch die Vermittlungsstelle NV2 mit Stellencode B* zu simulieren. Hierbei ist anzumerken, daß für den weiteren Betrieb neben den aus Initialisierungsnachrichten gewonnenen Daten selbstverständlich auch vom Prüfpersonal eingegebene Daten verwendet werden können, z.B. hinsichtlich der assoziierten bzw. quasi-assoziierten Signalisierung zu simulierten Vermittlungsstellen NV1,NV2.

Auch an diesem Beispiel wird der Vorteil der Inversion der Stellencodes simulierter Vermittlungsstellen deutlich. Es ist nicht erforderlich, dem Lastkonverter CLG spezifische Daten, wie z.B. Stellencodes, einzugeben; vielmehr ermittelt der Lastkonverter diese Informationen aus den empfangenen Nachrichten, in diesem Fall der Initialisierungsnachricht zn1. Freilich muß dafür gesorgt werden, daß bei der Konfiguration der zu prüfenden Vermittlungsstelle VST hinsichtlich ihrer Netzanschlüsse zu jeder Nachbarvermittlungsstelle mit einem Stellencode B stets eine weitere Vermittlungsstelle mit entsprechendem, über eine Inversionsoperation zugeordnetem Stellencode B* eingerichtet wird.

Falls der Lastkonverter CLG die Erzeugung und Entgegennahme von Signalisierungsnachrichten durchführen soll, sind eine Quelle und eine Senke für Signalisierungsnachrichten vorzusehen, um einerseits Nachrichten, deren Zielcode ein Stellencode einer simulierten Vermittlungsstelle ist, zu erzeugen und diese an die zu prüfende Vermittlungsstelle VST zu senden, und um andererseits von der Vermittlungsstelle die weitergeleiteten Nachrichten zu empfangen, auszuwerten und z.B. über den Erfolg dieser Übermittlung zu berichten.

Fig. 5 zeigt eine Übersicht des funktionalen Aufbaus des Lastkonverters CLG. Die Sende/Empfangseinrichtung SEE übernimmt, im Falle der Realisierung des Lastkonverters CLG als eigene Einrichtung, das Senden und Empfangen der Signalisierungsnachrichten auf die bzw. von der Signalisierungsschnittstelle SSS. Die Übertragung erfolgt, wie unten näher dargestellt, über die Sicherungsschicht DLL der in dem Ausführungsbeispiel verwendeten Protokollschichtarchitektur nach der ITU-Empfehlung Q.703.

Für die empfangenen Signalisierungsnachrichten entscheidet ein Diskriminator DIS, zu welcher der nachfolgenden Komponenten die betreffende Nachricht weitergeleitet wird. Die Entscheidung hierfür erfolgt aufgrund der Informationen in der Nachricht, insbesondere der Ursprungs- und Zielcodes unter Verwendung der abgespeicherten Konfigurationsinformationen. Beispielsweise kann vorgesehen sein, daß alle Initialisierungsnachrichten - wie die Nachricht zn1 der Fig. 4 - sowie andere Netzwerk-Steuernachrichten zu einer Netzwerkverwaltung NWV geleitet werden, wo die betreffenden Nachrichten ausgewertet werden und Quittungsmeldungen - z.B. Nachricht zq1 in Fig. 4 - erzeugt werden. Auch kann die Netzwerkverwaltung zur Ermittlung der Konfigurationsinformationen eingerichtet sein.

Signalisierungsnachrichten mit Ursprungscode einer simulierten Vermittlungsstelle und mit Zielcode einer simulierten Vermittlungsstelle werden z.B. der Nachrichtensenke SNK zugeführt, wo diese Nachrichten ausgewertet werden. Da für diese Nachrichten die zu prüfende Vermittlungsstelle Transferpunkt war, wird überprüft, ob die empfangene Nachricht hinsichtlich Inhalt und Zeitpunkt in Bezug auf die in der Nachrichtenquelle QUL des Lastkonverter erzeugten Signalisierungsnachrichten korrekt ist oder auf einen Funktionsfehler der zu prüfenden Vermittlung hinweist. Die in den Signalisierungsnachrichten der Nachrichtenquelle QUL verwendeten Ziel- und Ursprungscodes können aus Initialisierungsnachrichten zn1 (vgl. die obige Diskussion zu Fig. 4) gewonnen oder vom Prüfpersonal eingegeben worden sein.

Die übrigen Signalisierungsnachrichten werden einer Konvertereinrichtung CNV zugeführt, der die anhand Fig. 2 beschriebene Nachrichtenkonversion durchführt und die konvertierten Nachrichten an die Sende/Empfangseinrichtung SEE weiterleitet. Hierbei kann in Abhängigkeit von der Einstellung bzw. Programmierung der Konvertereinrichtung CNV die Konversion der Nachrichten auf verschiedene Weise durchgeführt werden, z.B. hinsichtlich der Einstellungen, ob eine Vertauschung von Ziel- und Ursprungscode stattfindet, ob eine Inversion und nach welcher Inversionvorschrift oder aber die ungeänderte Belassung des Zielcodes und/oder des Ursprungscodes erfolgt, wie falls gewünscht andere Information behandelt und/oder konvertiert werden usf., wobei auch vorgesehen sein kann, daß diese Vorschriften vom Inhalt der betreffenden Nachricht abhängt. Im Falle, daß der Lastkonverter mehrere Signalisierungsschnittstellen bedient, können die Vorschriften nach Bedarf z.B. für alle Schnittstellen oder für jeweils eine Schnittstelle eingestellt werden.

Alle in dem Lastkonverter CLG, sei dies von der Netzwerkverwaltung NWV, von der Konvertereinrichtung CNV oder von der Quelle QUL, erzeugten Nachrichten werden an die Sende/Empfangseinrichtung SEE weitergeleitet, welche die Nachrichten über die Signalisierungsschnittstelle SSS an die zu prüfende Vermittlungsstelle VST leitet.

Damit ist es möglich, nicht nur Signalisierungsnachrichten, für die die Vermittlungsstelle VST Signalisierungsendpunkt ist, seitens des Lastkonverters zu behandeln, sondern auch Signalisierungsverkehr für die Vermittlungsstelle VST als Transferpunkt zu erzeugen, über die Signalisierungsschnittstelle SSS zu senden, zu empfangen und auszuwerten. Besonders wenn der Lastkonverter CLG z.B. auf einer Plattform betrieben wird, auf der die Behandlung von Signalisierungsnachrichten, beispielsweise etwa im Rahmen eines CCS7-Systems, stattfindet, gelingt die Realisierung der Quellen- und Senkenfunktionen mit geringfügigem Aufwand.

Fig. 6 zeigt einen Signalisierungsablauf, in dem die zu prüfende Vermittlungsstelle als Signalisierungstransferpunkt dient. Hierbei wird in der Nachrichtenquelle QUL des Lastkonverters eine Signalisierungsnachricht s12, die von einer simulierten Vermittlungsstelle an eine zweite gerichtet ist, generiert und an die zu prüfende Vermittlungsstelle VST gesendet und geprüft, ob diese ordnungsgemäß die Nachricht zurücksendet, sowie die von der Vermittlungsstelle VST zurückgesandte Nachricht s21, die mit der ursprünglichen Nachricht s12 identisch sein sollte, empfangen und geprüft. Hierbei können zur Erzeugung und nachfolgenden Überprüfung der Nachrichten die aus den Initialisierungsnachrichten gewonnenen Konfigurationsinformationen verwendet werden; unter Umständen können auch anhand Routinginformationen, die in den Nachrichten s12,s21 enthalten sind, besondere Wege über andere, in den Zeichnungen nicht gezeigte Signalisierungsschnittstellen gewählt werden. Die Wahl verschiedener Signalisierungswege, genauer verschiedener Signalisierungsschnittstellen, für die ursprüngliche s12 und die zurückgesandte Nachricht s21 ist z.B. im CCS7-System erforderlich, da hier Nachrichten, die über dieselbe Schnittstelle bzw. Nachbarvermittlungsstelle zurückzusenden sind, als "Ping-Pong"-Nachricht erkannt und verworfen würden.

In der beispielhaften Ausführungsformen des Lastkonverters CLG, als Anwendungsprogramm der Softwareplattform der zu prüfenden Vermittlungsstelle VST, kann die in der Vermittlungsstelle VST bestehende Sende/Empfangseinrichtung SEE von der CLG benutzt werden. Die Aktivierung des Programmes geschieht beispielsweise mittels der oben beschriebenen 'Patches'. Auf der den Lastkonverter CLG realisierenden Plattform werden jene Protokollschichten, die oberhalb der Sicherungsschicht liegen, durch die dem Lastkonverter CLG zugehörende Software ersetzt, wie in Fig. 7 gezeigt.

Fig. 7 zeigt für die Vermittlungsstelle VST (linke Hälfte) die Protokollschichtarchitektur einer Zwischenamtssignalisierung des CCS7-Systems: die physikalische Schicht PHL ('Physical Layer') umfaßt die Ubertragungs- und Zugangsfunktionen eines physikalischen Signalisierungskanals; die Sicherungsschicht DLL ('Data Link Layer') sorgt für eine gegen Übertragungsfehler des Signalisierungskanals gesicherte Übermittlung der ausgetauschten Nachrichteneinheiten; die Vermittlungsschicht NWL ('Network Layer') enthält die für die Nachrichtenlenkung und Verwaltung des Signalisierungsnetzes erforderlichen Funktionen; und schließlich enthält die Anwenderschicht UP ('User Part'), z.B. das 'Telephone User Part' des analogen Fernsprechnetzes, die dienstspezifischen Funktionen für die Vermittlungsaufgaben der Kommunikationsdienste. Wie in der rechten Hälfte der Fig. 7 gezeigt, werden im Lastkonverter die Verbindungen der Netzschnittstellen, die der physikalischen Schicht PHL und der Sicherungsschicht DLL entsprechen, unverändert benutzt. Anstelle der Vermittlungsschicht NWL treten die anhand Fig. 5 beschriebenen Funktionen des Lastkonverters, die als "Umlenkeinrichtung" die Signalisierung auf die Konverterfunktionen umlenken. Eine Schnittstelle zu höheren Schichten (User Parts) ist seitens des Lastkonverters CLG nicht realisiert, da alle Nachrichten konvertiert werden bzw. in der Nachrichtensenke SNK aufgenommen werden. Somit gehören die physikalischen Verbindungen zu der Plattform des Lastkonverters CLG zu der Vermittlungsstelle VST gemäß deren logischen Verwaltung, die darüberliegenden Schichten sind zwar eingerichtet, werden jedoch nicht mehr von den unteren Schichten verwendet.

In anderen Ausführungsformen kann die Sende/Empfangseinrichtung SEE als Umlenkeinrichtung vorgesehen sein, z.B. als Signalweiche, welche die von der Vermittlungsstelle VST gesendeten Signalisierungsnachrichten von der Signalisierungsschnittstelle SSS zum Lastkonverter CLG, sowie umgekehrt die im Lastkonverter erzeugten bzw. konvertierten Nachrichten auf die Signalisierungsschnittstelle SSS umlenkt. Weiters können einzelne oder sämtliche Komponenten des Lastkonverters CLG z.B. als eigene Baugruppen oder Programmodule einer SoftwarePlattform realisiert sein.

## Patentansprüche

1. Verfahren zur Überprüfung der Funktionsfähigkeit einer zu prüfenden Vermittlungsstelle (VST), welche in einem Telekommunikationsnetz zur Herstellung von Teilnehmerverbindungen einsetzbar ist und welche zumindest zwei Vermittlungsanschlüsse, an welche Vermittlungsstellen (NV1, NV2) anschließbar sind und in welchen jeweils eine Zwischenschnittstelle (NK1, NK2) für den Austausch von Nutzinformation der Teilnehmerverbindungen mit einer jeweils angeschlossenen Vermittlungsstelle vorgesehen ist, und zumindest eine Signalisierungsschnittstelle (SSS), über welche der Austausch von Signalisierungsnachrichten zur Steuerung der Teilnehmerverbindungen und zur Verwaltung der Zwischenschnittstellen (NK1, NK2) erfolgt, aufweist, wobei jede signalisierungsnachricht Angaben betreffend ihre Ursprungs- und Zielvermittlungsstelle aufweist,
**dadurch gekennzeichnet,**
**daß** von der zu prüfenden Vermittlungsstelle (VST) ausgesandte, ursprüngliche Signalisierungsnachrichten (ss1, ss2), in welchen die zu prüfende Vermittlungsstelle (VST) als Ursprungsvermittlungsstelle angegeben ist, empfangen werden,
die ursprünglichen Signalisierungsnachrichten (ss1, ss2) nach einer ersten vorgegebenen Vorschrift jeweils in Signalisierungsnachrichten (cs1, cs2), in welchen die zu prüfende Vermittlungsstelle (VST) als Zielvermittlungsstelle angegeben ist, konvertiert werden und
die so konvertierten Signalisierungsnachrichten (cs1, cs2) an die zu prüfende Vermittlungsstelle (VST) gesendet werden.

2. Verfahren nach Anspruch 1,
**dadurch gekennzeichnet, daß** die konvertierten signalisierungsnachrichten (cs1, cs2) der zu prüfenden Vermittlungsstelle (VST) jeweils über jene Signalisierungsschnittstelle (SSS) gesendet werden, über welche die zugehörige ursprüngliche Signalisierungsnachricht (ss1, ss2) empfangen wurde.

3. Verfahren nach Anspruch 1 oder 2,
**dadurch gekennzeichnet, daß** in den konvertierten Signalisierungsnachrichten (cs1, cs2) als Ursprungsvermittlungstelle jeweils eine Vermittlungsstelle (NV2), die der Zielvermittlungsstelle (NV1) der zugehörigen ursprünglichen Signalisierungsnachricht (ss1, ss2) eindeutig zugeordnet ist, angegeben wird.

4. Verfahren nach Anspruch 3,
**dadurch gekennzeichnet, daß** die in den Signalisierungsnachrichten angegebenen Vermittlungsstellen (NV1, NV2) einander paarweise zugeordnet sind und daß in der konvertierten Signalisierungsnachricht (cs1, cs2) als Ursprungsvermittlungsstelle die der Zielsvermittlungsstelle der ursprünglichen Signalisierungsnachricht (ss1, ss2) zugeordnete Vermittlungsstelle angegeben wird.

5. Verfahren nach Anspruch 4,
**dadurch gekennzeichnet, daß** die Adressen der einander zugeordneten Vermittlungsstellen (NV1, NV2) durch eine Inversionsoperation auseinander bestimmt werden.

6. Verfahren nach einem der Ansprüche 3 bis 5,
**dadurch gekennzeichnet, daß** jeweils jene Zwischenschnittstellen (NK1, NK2), die einander zugeordneten Vermittlungsstellen (NV1, NV2) logisch zugeordnet sind, durchgeschleift werden.

7. Verfahren nach einem der Ansprüche 1 bis 6,
**dadurch gekennzeichnet, daß** die Signalisierungsschnittstelle (SSS) an ein von den Zwischenschnittstellen (NK1, NK2) unabhängiges Signalisierungsnetz angeschlossen ist.

8. Verfahren nach einem der Ansprüche 1 bis 7,
**dadurch gekennzeichnet, daß** zusätzlich Signalisierungsnachrichten (s12), in denen von der zu prüfenden Vermittlungsstelle (VST) verschiedene Ursprungs- und Zielvermittlungsstellen angegeben werden, erzeugt und an die zu prüfende Vermittlungsstelle gesendet werden, und daß von der zu prüfenden Vermittlungsstelle (VST) ausgesandte Signalisierungsnachrichten (s21), in denen von der zu prüfenden Vermittlungsstelle (VST) verschiedene Ursprungs- und Zielvermittlungsstellen angegeben werden, empfangen und hinsichtlich der Übereinstimmung in Bezug auf früher gesendete Signalisierungsnachrichten überprüft werden.

9. Einrichtung (CLG) zur Überprüfung der Funktionsfähigkeit einer zu prüfenden Vermittlungsstelle (VST) zur Herstellung von Teilnehmerverbindungen in einem Telekommunikationsnetz,
**gekennzeichnet durch**
eine Signalisierungsschnittstelle (SSS), an welche die zu prüfende Vermittlungsstelle (VST) anschließbar ist und welche für den Austausch von Signalisierungsnachrichten zwischen Vermittlungsstellen zur Steuerung von Teilnehmerverbindungen und zur Verwaltung der die Vermittlungsstellen verbindenden Zwischenschnittstellen eingerichtet ist, wobei jede Signalisierungsnachricht Angaben betreffend ihre Ursprungs- und Zielvermittlungsstelle aufweist,
eine Einrichtung (SEE) zum Senden und Empfangen von Signalisierungsnachrichten (ss1, ss2) über die Signalisierungsschnittstelle (n) (SSS) und
eine Konvertereinrichtung (CNV), deren Ausgang der Sende/Empfangseinrichtung (SEE) zugeführt ist und der seitens der Sende/Empfangseinrichtung (SEE) empfangene Signalisierungsnachrichten zuführbar sind, zur Konversion von ursprünglichen Signalisierungsnachrichten (ss1, ss2) nach einer ersten vorgegebenen Vorschrift in konvertierte Signalisierungsnachrichten (cs1, cs2), in welchen als Zielvermittlungsstelle jeweils die Ursprungsvermittlungsstelle der ursprünglichen Signalisierungsnachricht angegeben ist.

10. Einrichtung nach Anspruch 9,
**gekennzeichnet durch**
eine Nachrichtenquelle (QUL), deren Ausgang der Sende/Empfangseinrichtung (SEE) zugeführt ist, zur Erzeugung von Signalisierungsnachrichten, in denen von der zu prüfenden Vermittlungsstelle (VST) verschiedene Ursprungs- und Zielvermittlungsstellen angegeben sind,
eine Nachrichtensenke (SNK) zur Entgegennahme von Signalisierungsnachrichten und/oder deren Auswertung hinsichtlich der Übereinstimmung in Bezug auf früher gesendete Signalisierungsnachrichten, und
eine Diskriminator-Einrichtung (DIS), welcher seitens der Sende/Empfangseinrichtung (SEE) empfangene Signalisierungsnachrichten zuführbar sind, zur Zuteilung der Signalisierungsnachrichten zu nachfolgenden, Nachrichten verarbeitenden Einrichtungen wie der Konvertereinrichtung (CNV) und der Nachrichtensenke (SNK) nach einer zweiten, zu der ersten unterschiedlichen, vorgegebenen Vorschrift unter Verwendung des Inhalts der betreffenden Signalisierungsnachricht.

11. Vermittlungsstelle (VST), welche in einem Telekommunikationsnetz zur Herstellung von Teilnehmerverbindungen einsetzbar ist und welche zumindest zwei Vermittlungsanschlüse, an welche Vermittlungsstellen (NV1, NV2) anschließbar sind und in welchen jeweils eine Zwischenschnittstelle (NK1, NK2) für den Austausch von Nutzinformation der Teilnehmerverbindungen mit einer jeweils angeschlossenen Vermittlungsstelle vorgesehen ist, und zumindest eine Signalisierungsschnittstelle (SSS), über welche der Austausch von Signalisierungsnachrichten zur Steuerung der Teilnehmerverbindungen und zur Verwaltung der Zwischenschnittstellen (NK1, NK2) erfolgt, aufweist, wobei jede Signalisierungsnachricht Angaben betreffend ihre Ursprungs- und Zielvermittlungsstelle aufweist,
**gekennzeichnet durch**
eine Konvertereinrichtung (CNV) zur Konversion von ursprünglichen Signalisierungsnachrichten (ss1, ss2) nach einer ersten vorgegebenen Vorschrift in konvertierte Signalisierungsnachrichten (cs1, cs2), in welchen als Zielvermittlungsstelle jeweils die Ursprungsvermittlungsstelle der ursprünglichen Signalisierungsnachricht angegeben ist, und
eine Umlenkeinrichtung (SEE) zum Umlenken von zu sendenden Signalisierungsnachrichten als ursprüngliche Signalisierungsnachrichten (ss1, ss2) von der Signalisierungsschnittstelle (SSS) zu der Konvertereinrichtung (CNV) und zum Umlenken von in der Konvertereinrichtung (CNV) konvertierten Signalisierungsnachrichten (cs1, cs2) als bei der Vermittlungsstelle (VST) einlangende Signalisierungsnachrichten zu der Signalisierungsschnittstelle (SSS).

12. Vermittlungsstelle nach Anspruch 11,
**gekennzeichnet durch**
eine Nachrichtenquelle (QUL), deren Ausgang der Umlenkeinrichtung (SEE) zugeführt ist, zur Erzeugung von Signalisierungsnachrichten, in denen von der zu prüfenden Vermittlungsstelle (VST) verschiedene Ursprungs- und Zielvermittlungsstellen angegeben sind,
eine Nachrichtensenke (SNK) zur Entgegennahme von Signalisierungsnachrichten und/oder deren Auswertung hinsichtlich der Übereinstimmung in Bezug auf früher gesendete Signalisierungsnachrichten und
eine Diskriminator-Einrichtung (DIS), welcher seitens der Umlenkeinrichtung (SEE) umgelenkte Signalisierungsnachrichten zuführbar sind, zur Zuteilung der Signalisierungsnachrichten zu nachfolgenden, Nachrichten verarbeitenden Einrichtungen wie der Konvertereinrichtung (CNV) und der Nachrichtensenke (SNK) nach einer zweiten, zu der ersten unterschiedlichen, vorgegebenen Vorschrift unter Verwendung des Inhalts der betreffenden Signalisierungsnachricht.

## Claims

1. Method for checking the functionality of a switching centre (VST) which is to be tested, can be used to produce subscriber connections in a telecommunications network and has at least two switching connections to which switching centres (NV1, NV2) can be connected and in each of which an intermediate interface (NK1, NK2) is provided for interchanging user information on the subscriber connections with a respectively connected switching centre, and has at least one signalling interface (SSS) via which signalling messages for controlling the subscriber connections and for administration of the intermediate interfaces (NK1, NK2) are interchanged, with each signalling message having details relating to its source and destination switching centre,
**characterized**
**in that** original signalling messages (ss1, ss2) which have been transmitted from the switching centre (VST) which is to be tested and in which the switching centre (VST) which is to be tested is stated as the source switching centre are received,
the original signalling messages (ss1, ss2) are each converted in accordance with a first predetermined rule into signalling messages (cs1, cs2) in which the switching centre (VST) which is to be tested is stated as the destination switching centre,
and
the signalling messages (cs1, cs2) which have been converted in this way are sent to the switching centre (VST) which is to be tested.

2. Method according to Claim 1,
**characterized in that** the converted signalling messages (cs1, cs2) are each sent to the switching centre (VST) which is to be tested via that signalling interface (SSS) via which the associated original signalling message (ss1, ss2) was received.

3. Method according to Claim 1 or 2,
**characterized in that** a switching centre (NV2) which is uniquely associated with the destination switching centre (NV1) of the associated original signalling message (ss1, ss2) is stated as the source switching centre in each of the converted signalling messages (cs1, cs2).

4. Method according to Claim 3,
**characterized in that** the switching centres (NV1, NV2) which are stated in the signalling messages are associated with one another in pairs, and **in that** the switching centre which is associated with the destination switching centre of the original signalling message (ss1, ss2) is stated as the source switching centre in the converted signalling message (cs1, cs2).

5. Method according to Claim 4,
**characterized in that** the addresses of the mutually associated switching centres (NV1, NV2) are determined from one another by means of an inversion operation.

6. Method according to one of Claims 3 to 5,
**characterized in that** each of those intermediate interfaces (NK1, NK2) which are logically associated with mutually associated switching centres (NV1, NV2) are looped through.

7. Method according to one of Claims 1 to 6,
**characterized in that** the signalling interface (SSS) is connected to a signalling network which is independent of the intermediate interfaces (NK1, NK2).

8. Method according to one of Claims 1 to 7,
**characterized in that**, in addition, signalling messages (s12), in which source and destination switching centres which differ from the switching centre (VST) which is to be tested are stated, are produced and are sent to the switching centre which is to be tested, and **in that** signalling messages (s21), which have been transmitted from the switching centre (VST) which is to be tested and in which source and destination switching centres which differ from the switching centre (VST) which is to be tested are stated, are received and are checked to determine whether they match previously sent signalling messages.

9. Device (CLG) for checking the functionality of a switching centre (VST), which is to be tested, for producing subscriber connections in a telecommunications network,
**characterized by**
a signalling interface (SSS) to which the switching centre (VST) which is to be tested can be connected and which is set up for interchanging signalling messages between switching centres for controlling subscriber connections and for administration of the intermediate interfaces which connect the switching centres, with each signalling message having details relating to its source and destination switching centre,
a device (SEE) for transmitting and receiving signalling messages (ss1, ss2) via the signalling interface or interfaces (SSS), and
a converter device (CNV) whose output is supplied to the transmitting/receiving device (SEE) and to which signalling messages which have been received by the transmitting/receiving device (SEE) can be supplied, for conversion of original signalling messages (ss1, ss2) in accordance with a first predetermined rule into converted signalling messages (cs1, cs2) in each of which the source switching centre of the original signalling message is stated as the destination switching centre.

10. Device according to claim 9,
**characterized by**
a message source (QUL) whose output is supplied to the transmitting/receiving device (SEE), in order to produce signalling messages in which source and destination switching centres which differ from the switching centre (VST) which is to be tested are stated,
a message sink (SNK) for receiving signalling messages and/or for evaluating them to determine whether they match previously sent signalling messages, and
a discriminator device (DIS) to which signalling messages which have been received by the transmitting/receiving device (SEE) can be supplied, for assigning signalling messages to subsequent devices which process messages, such as the converter device (CNV) and the message sink (SNK), in accordance with a second predetermined rule, which differs from the first rule, using the contents of the relevant signalling message.

11. Switching centre (VST) which can be used to produce subscriber connections in a telecommunications network and has at least two switching connections to which switching centres (NV1, NV2) can be connected and in each of which an intermediate interface (NK1, NK2) is provided for interchanging user information on the subscriber connections with a respectively connected switching centre, and has at least one signalling interface (SSS) via which signalling messages for controlling the subscriber connections and for administration of the intermediate interfaces (NK1, NK2) are interchanged, with each signalling message having details relating to its source and destination switching centre,
**characterized by**
a converter device (CNV) for conversion of original signalling messages (ss1, ss2) in accordance with a first predetermined rule into converted signalling messages (cs1, cs2) in each of which the source switching centre of the original signalling message is stated as the destination switching centre, and
a rerouting device (SEE) for rerouting signalling messages which are to be sent as original signalling messages (ss1, ss2) from the signalling interface (SSS) to the converter device (CNV), and for rerouting signalling messages (cs1, cs2) which have been converted in the converter device (CNV) as signalling messages which arrive at the switching centre (VST) to the signalling interface (SSS).

12. Switching centre according to Claim 11,
**characterized by**
a message source (QUL) whose output is supplied to the rerouting device (SEE) for producing signalling messages in which source and destination switching centres which differ from the switching centre (VST) which is to be tested are stated,
a message sink (SNK) for receiving signalling messages and/or for evaluating them to determine whether they match previously sent signalling messages, and
a discriminator device (DIS) to which signalling messages which have been rerouted by the rerouting device (SEE) can be supplied, for assigning signalling messages to subsequent devices which process messages, such as the converter device (CNV) and the message sink (SNK), in accordance with a second predetermined rule, which differs from the first rule, using the contents of the relevant signalling message.

## Revendications

1. Procédé pour examiner l'aptitude au fonctionnement d'un centre de commutation à contrôler (VST), lequel peut être mis en oeuvre dans un réseau de télécommunications pour établir des connexions d'abonnés et qui comporte au moins deux raccordements de commutation auxquels peuvent être raccordés des centres de commutation (NV1, NV2) et dans lesquels est respectivement prévue une interface intermédiaire (NK1, NK2) pour l'échange d'informations utiles des connexions d'abonnés avec un centre de commutation respectivement raccordé, et au moins une interface de signalisation (SSS) via laquelle se produit l'échange de messages de signalisation pour commander les connexions d'abonnés et pour administrer les interfaces intermédiaires (NK1, NK2), chaque message de signalisation comportant des indications concernant son centre de commutation de départ et son centre de commutation de destination,
**caractérisé en ce que**
des messages de signalisation de départ (ss1, ss2) émis par le centre de commutation à contrôler (VST), dans lesquels le centre de commutation à contrôler (VST) est indiqué comme étant le centre de commutation de départ, sont reçus,
les messages de signalisation de départ (ss1, ss2) sont convertis selon une première règle prédéterminée respectivement en messages de signalisation (cs1, cs2) dans lesquels le centre de commutation à contrôler (VST) est indiqué comme étant le centre de commutation de destination et les messages de signalisation (cs1, cs2) ainsi convertis sont envoyés au centre de commutation à contrôler (VST).

2. Procédé selon la revendication 1,
**caractérisé en ce que** les messages de signalisation convertis (cs1, cs2) du centre de commutation à contrôler (VST) sont respectivement émis via l'interface de signalisation (SSS) via laquelle le message de signalisation de départ (ss1, ss2) associé a été reçu.

3. Procédé selon la revendication 1 ou 2,
**caractérisé en ce qu'**est respectivement indiqué, dans les messages de signalisation convertis (cs1, cs2), en tant que centre de commutation de départ, un centre de commutation (NV2) qui est univoquement associé au centre de commutation de destination (NV1) du message de signalisation de départ (ss1, ss2) associé.

4. Procédé selon la revendication 3,
**caractérisé en ce que** les centres de commutation (NV1, NV2) indiqués dans les messages de signalisation sont associés entre eux par paires et **en ce que** le centre de commutation associé au centre de commutation de destination du message de signalisation de départ (ss1, ss2) est indiqué dans le message de signalisation converti (cs1, cs2) en tant que centre de commutation de départ.

5. Procédé selon la revendication 4,
**caractérisé en ce que** les adresses des centres de commutation (NV1, NV2) associés entre eux sont déterminées l'une à partir de l'autre par une opération d'inversion.

6. Procédé selon l'une des revendications 3 à 5,
**caractérisé en ce que** des interfaces intermédiaires (NK1, NK2), qui sont associées logiquement à des centres de commutation (NV1, NV2) associés entre eux, sont respectivement bouclées.

7. Procédé selon l'une des revendications 1 à 6,
**caractérisé en ce que** l'interface de signalisation (SSS) est raccordée à un réseau de signalisation indépendant des interfaces intermédiaires (NK1, NK2).

8. Procédé selon l'une des revendications 1 à 7,
**caractérisé en ce que** des messages de signalisation (s12), dans lesquels des centres de commutation de départ et de destination différents du centre de commutation à contrôler (VST) sont indiqués, sont générés additionnellement et envoyés au centre de commutation à contrôler et **en ce que** des messages de signalisation (s21) émis par le centre de commutation à contrôler (VST), dans lesquels des centres de commutation de départ et de destination différents du centre de commutation à contrôler (VST) sont indiqués, sont reçus et examinés pour ce qui est de la coïncidence par rapport à des messages de signalisation émis antérieurement.

9. Dispositif (CLG) pour examiner l'aptitude au fonctionnement d'un centre de commutation à contrôler (VST) qui sert à établir des connexions d'abonnés dans un réseau de télécommunications,
**caractérisé par**
une interface de signalisation (SSS) à laquelle le centre de commutation à contrôler (VST) peut être raccordé et qui est aménagée pour l'échange de messages de signalisation entre centres de commutation pour la commande de connexions d'abonnés et pour l'administration des interfaces intermédiaires reliant les centres de commutation, chaque message de signalisation comportant des indications sur son centre de commutation de départ et son centre de commutation de destination,
un dispositif (SEE) pour émettre et recevoir des messages de signalisation (ss1, ss2) via l'interface/les interfaces de signalisation (SSS) et
un dispositif convertisseur (CNV), dont la sortie est amenée au dispositif d'émission/de réception (SEE) et auquel peuvent être amenés des messages de signalisation reçus du côté du dispositif d'émission/de réception (SEE), pour la conversion de messages de signalisation de départ (ss1, ss2) selon une première règle prédéterminée en des messages de signalisation convertis (cs1, cs2) dans lesquels est respectivement indiqué, en tant que centre de commutation de destination, le centre de commutation de départ du message de signalisation de départ.

10. Dispositif selon la revendication 9,
**caractérisé par**
une source de messages (QUL), dont la sortie est amenée au dispositif d'émission/de réception (SEE), pour générer des messages de signalisation dans lesquels des centres de commutation de départ et de destination différents du centre de commutation à contrôler (VST) sont indiqués,
un collecteur de messages (SNK) pour recevoir des messages de signalisation et/ou pour leur évaluation pour ce qui est de la coïncidence par rapport à des messages de signalisation émis antérieurement, et
un dispositif discriminateur (DIS), auquel peuvent être amenés des messages de signalisation reçus du côté du dispositif d'émission/de réception (SEE), pour l'affectation des messages de signalisation à des dispositifs suivants, qui traitent des messages, tels que le dispositif convertisseur (CNV) et le collecteur de message (SNK), selon une deuxième règle prédéterminée, différente de la première, en utilisant le contenu du message de signalisation concerné.

11. Centre de commutation (VST) pouvant être mis en oeuvre dans un réseau de télécommunications pour établir des connexions d'abonnés et comportant au moins deux raccordements de commutation auxquels peuvent être raccordés des centres de commutation (NV1, NV2) et dans lesquels est respectivement prévue une interface intermédiaire (NK1, NK2) pour l'échange d'informations utiles des connexions d'abonnés avec un centre de commutation respectivement raccordé, et au moins une interface de signalisation (SSS) via laquelle se produit l'échange de messages de signalisation pour commander les connexions d'abonnés et pour administrer les interfaces intermédiaires (NK1, NK2), chaque message de signalisation comportant des indications concernant son centre de commutation de départ et son centre de commutation de destination,
**caractérisé par**
un dispositif convertisseur (CNV) pour convertir des messages de signalisation de départ (ss1, ss2) selon une première règle prédéterminée en messages de signalisation convertis (cs1, cs2) dans lesquels le centre de commutation de départ du message de signalisation de départ est respectivement indiqué en tant que centre de commutation de destination et
un dispositif de déviation (SEE) pour dévier des messages de signalisation à émettre en tant que messages de signalisation de départ (ss1, ss2) de l'interface de signalisation (SSS) vers le dispositif convertisseur (CNV) et pour dévier vers l'interface de signalisation (SSS) des messages de signalisation convertis (cs1, cs2) dans le dispositif convertisseur (CNV) en tant que messages de signalisation arrivant au centre de commutation (VST).

12. Centre de commutation selon la revendication 11,
**caractérisé par**
une source de messages (QUL), dont la sortie est amenée au dispositif de déviation (SEE), pour générer des messages de signalisation dans lesquels des centres de commutation de départ et de destination différents du centre de commutation à contrôler (VST) sont indiqués,
un collecteur de messages (SNK) pour recevoir des messages de signalisation et/ou pour leur évaluation pour ce qui est de la coïncidence par rapport à des messages de signalisation émis antérieurement, et
un dispositif discriminateur (DIS), auquel peuvent être amenés des messages de signalisation déviés du côté du dispositif de déviation (SEE), pour l'affectation des messages de signalisation à des dispositifs suivants, qui traitent des messages, tels que le dispositif convertisseur (CNV) et le collecteur de message (SNK), selon une deuxième règle prédéterminée, différente de la première, en utilisant le contenu du message de signalisation concerné.
